# EUROPEAN PATENT APPLICATION

(11) **EP 2 058 566 A1**
(43) Date of publication of application: **13.05.2009**
(21) Application number: 07792022.1
(22) Date of filing: 06.08.2007
(51) Int. Cl.: F16K 1/24, F16K 51/02

(54) **VALVE DEVICE**

(30) Priority: 11.08.2006 JP 2006220507
(71) Applicant: Nippon Valqua Industries, Ltd., Tokyo 163-0406 (JP)
(72) Inventor: NISHIBA, Takehiro, Hamamatsu-shi, Shizuoka 431-2103 (JP)
(74) Representative: Skuhra, Udo
(86) International application number: PCT/JP2007/065349
(87) International publication number: WO 2008/018405

(57) **Abstract**

To provide a valve device in which different driving mechanisms, that is, a rotating mechanism and a lifting mechanism are controlled by one driving source, thereby realizing compactness and high reliability of the driving mechanisms.

A valve device includes: a valve element unit 52 closing or opening a first opening 46 of a casing 44; a valve element driving unit 11 rotating the valve element unit 52 to move the valve element unit 52 to a position facing the first opening 46, and moving the valve element unit 52 in a radial direction to make the valve element unit 52 seated on the first opening 46; a first sealing member 58 provided on the valve element unit 52; and stoppers 39A, 39B, 35 restricting the rotation of the valve element unit 52, wherein the valve element driving unit 11 includes: a support 13 rotatably supporting the valve element unit 52; a shaft part 17 which has an eccentric shaft portion 17B connected to the valve element unit 52 and having a center located at a position a predetermined distance apart from a center of the rotation; and a driving source 66 rotating the shaft part 17.

## Description

### Technical Field

The present invention relates to a valve device used for a process chamber where a predetermined process is applied to an object to be processed such as a semiconductor wafer.

### Background Art

Generally, in a manufacturing process of a semiconductor device, various kinds of processes such as, for example, dry etching, sputtering, and CVD (Chemical Vapor Deposition) are repeatedly applied to a semiconductor wafer. Many of the above various processes are performed under a vacuum atmosphere, and load openings through which the wafer is loaded /unloaded into/from process chambers for these kinds of processes are sealed by gate valve devices in a highly airtight state during the processes.

A gate valve device of this type is, for example, mounted on a load opening which is formed on a sidewall of an evacuatable process chamber and has a narrow width large enough to allow the passage of the wafer. During the process, the process is performed in a state where the load opening is airtightly closed by a valve element, which is provided with an O-ring or the like, of the gate valve device.

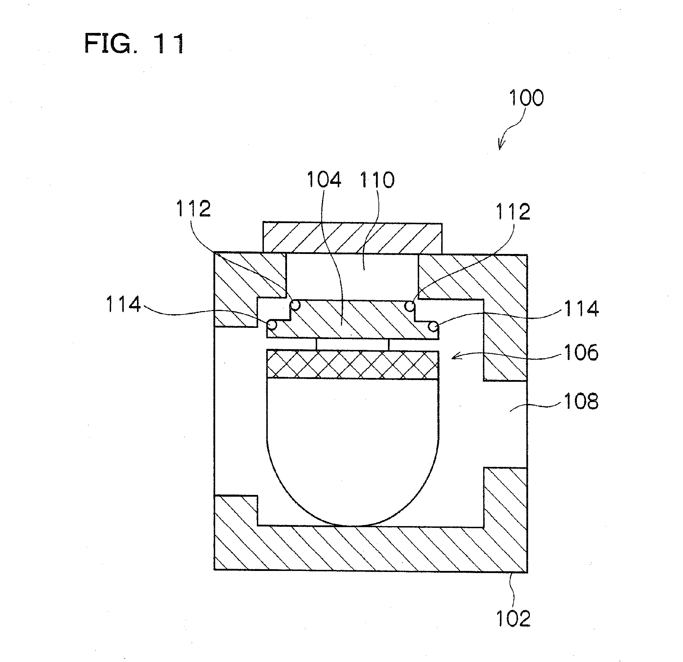

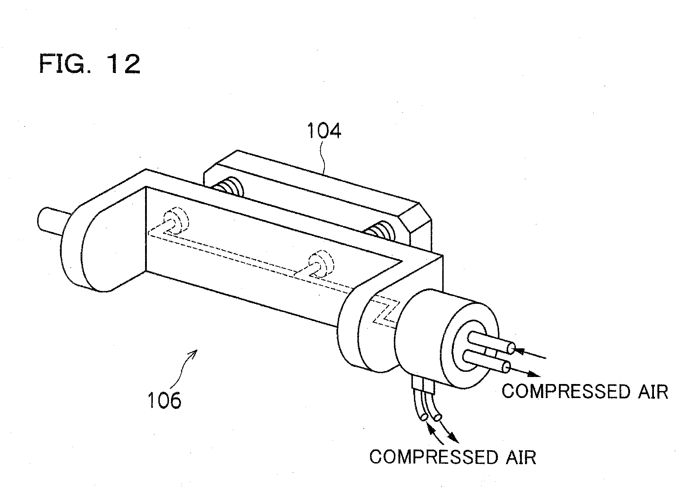

Here, as shown in FIG. 11 and FIG. 12, a conventional gate valve device 100 has a casing 102, a valve element 104 drivably provided in the casing 102, and a valve element driving unit 106 which rotary drives the valve element 104 and thereafter presses the valve element 104 toward a valve seat. Further, in the casing 102, formed are a first opening 108 for communication with an adjacent process chamber (not shown) and a second opening 110 through which the maintenance of a later-described first sealing member 112 provided on the valve element 104 is performed. The valve element 104 is capable of closing the first opening 108 or the second opening 110 when rotary driven and pressed toward the valve seat by the valve element driving unit 106. On a front surface of the valve element 104, there are provided the first sealing member 112 for airtightly sealing the first opening 108 when the valve element 104 closes the first opening 108 and a second sealing member 114 for airtightly sealing the second opening 110 when the valve element 104 closes the second opening 110.

In the gate valve device 100 with the above-described structure, in the state where the valve element 104 closes the first opening 108, the first sealing member 112 is elastically deformed, and in the state where the valve element 104 closes the second opening 110, the second sealing member 114 is elastically deformed. The sealing members 112, 114 are capable of airtightly sealing the first opening 108 and the second opening 110 respectively owing to their elastic deformation.
Patent document 1: Japanese Patent Application Laid-open No. 2006-170373

### Disclosure of the Invention

### Problems to Be Solved by the Invention

In the gate valve device with the above-described structure, the valve element driving unit has both a rotating mechanism and a lifting mechanism for lifting up and down the valve element and thus has a complicated structure, which has created a demand for realizing a highly reliable driving unit. In particular, as is disclosed in the conventional art, since the valve element is pressed toward the openings by a thrust of the valve element driving unit when driven by compressed air, the valve element moves at a high speed when pressed toward the openings, and gives a great impact force when the valve element is seated on the openings. As a result, the sealing members are likely to be deteriorated and broken, leading to a problem of the generation of particles.

Further, the regulating or setting of squeeze of the first sealing member and the second sealing member is controlled only by the thrust of the valve element driving unit, but if the regulating or setting of the squeeze of the first sealing member and the second sealing member is tried to be controlled only by the thrust of the valve element driving unit, delicate control is difficult and thus the first sealing member and the second sealing member are sometimes excessively crushed. As a result, there arise problems of a failure in achieving stable sealing performance, deterioration of product life of the first sealing member and the second sealing member, and easy generation of particles.

Therefore, considering the above circumstances, it is an object of the present invention to provide a valve device in which different driving mechanisms, that is, a rotating mechanism and a lifting mechanism are driven by one driving source, thereby realizing compactness and high reliability of the driving mechanisms.

It is another object of the present invention to provide a valve device capable of reducing an impact force given to openings by a first sealing member and a second sealing member, making a pressing amount of the sealing members to the openings constant, and having a long life and high sealing performance.

### Means for Solving the Problems

An invention according to claim 1 is a valve device including: a valve element unit closing or opening an opening formed in a casing; a valve element driving unit rotating the valve element unit around an axis to enable the valve element unit to move to a position facing the opening, and moving the valve element unit in a radial direction to enable the valve element unit to close or open the opening; a sealing member provided on the valve element unit to airtightly seal the opening when the valve element unit closes the opening; and a stopper restricting the rotation of the valve element unit, wherein the valve element driving unit includes: a support rotatably supporting the valve element unit; an eccentric shaft part which has an eccentric shaft portion connected to the valve element unit and having a center located at a position a predetermined distance apart from a center of the rotation, and which rotates to move the valve element unit in the radial direction; and a driving source rotating the support or the eccentric shaft part, and wherein the stopper hinders the rotation of the support in one direction when the valve element unit is at the position facing the opening.

An invention according to claim 2 is a valve device including: a valve element unit closing or opening a first opening or a second opening of a casing, the first opening and the second opening being formed in one sidewall and another sidewall of the casing respectively; a valve element driving unit rotating the valve element unit around an axis to enable the valve element unit to move to a position facing the first opening or the second opening, and moving the valve element unit in a radial direction to enable the valve element unit to close or open the first opening or the second opening; a first sealing member and a second sealing member which are provided on the valve element unit, the first sealing member airtightly sealing the first opening when the valve element unit closes the first opening, and the second sealing member airtightly sealing the second opening when the valve element unit closes the second opening; and a stopper restricting the rotation of the valve element unit, wherein the valve element driving unit includes: a support rotatably supporting the valve element unit; an eccentric shaft part which has an eccentric shaft portion connected to the valve element unit and having a center located at a position a predetermined distance apart from a center of the rotation, and which rotates to move the valve element unit in the radial direction; and a driving source rotating the support or the eccentric shaft part, and wherein the stopper hinders the rotation of the support in one direction when the valve element unit is at the position facing the first opening, and hinders the rotation of the support in another direction when the valve element unit is at the position facing the second opening.

An invention according to claim 3 is the valve device according to claim 1 or 2, further including a rotational force applier applying, to the support, a rotational force rotating the support in the one direction, wherein the rotation of the support is controlled by a magnitude relation between the rotational force applied to the support from the rotational force applier and a driving force from the driving source.

The invention according to claim 4 is the valve device according to claim 3, wherein the rotational force applier is a spiral spring.

### Effect of the Invention

In the invention according to claim 1, the rotation of the support in the one direction is hindered by the stopper when the valve element unit is at the position facing the opening. Then, when the valve element unit is at the position facing the opening, the eccentric shaft part rotates in the one direction, so that the valve element unit moves radially outward by a distance based on an eccentricity amount of the eccentric shaft portion of the eccentric shaft part to be seated on the opening. At this time, the opening is closed while airtightly sealed by the sealing member. On the other hand, when the eccentric shaft part rotates in the other direction when the valve element unit is at the position facing the opening, the valve element unit moves radially inward. Consequently, the opening is opened.

As described above, according to the present invention, a radially outward movement amount of the valve element unit depends on the eccentricity amount of the eccentric shaft portion of the eccentric shaft part. Therefore, it is possible to easily control the radially outward movement amount of the valve element unit to a fixed amount, only by setting the eccentricity amount of the eccentric shaft portion of the eccentric shaft part to a predetermined value. Therefore, with a simple structure, a constant pressing amount of the sealing member to the opening is achieved, and an impact force of the sealing member to the opening can be reduced. As a result, it is possible to retard the deterioration of product life of the sealing member and further to prevent the generation of particles ascribable to the sealing member. Further, since the rotation of the support is stopped by the stopper when the valve element unit is at the position facing the opening, positional deviation of the valve element unit from the opening can be prevented. This ensures that the opening is closed and airtightly sealed.

In the invention according to claim 2, the driving force from the driving source rotates both the support and the eccentric shaft part in a predetermined direction from reference positions which are their positions when the valve element unit is at the position facing the second opening. Consequently, the valve element unit moves to the position facing the first opening. When the valve element unit moves to the position facing the first opening, the rotation of the support in the one direction is hindered by the stopper, so that the valve element unit is positioned at a proper position. When the eccentric shaft part further rotates in the predetermined direction, the valve element unit moves radially outward by the distance based on the eccentricity amount of the eccentric shaft portion of the eccentric shaft part to be seated on the first opening. At this time, the first opening is closed while airtightly sealed by the first sealing member.

On the other hand, when the eccentric shaft part rotates in the reverse direction when the valve element unit is at the position facing the first opening, the valve element unit moves radially inward to open the first opening. When the eccentric shaft part further rotates in the reverse direction, the support rotates following the driving of the eccentric shaft part. Consequently, the valve element unit moves to the position facing the second opening to return to the original reference position. When the valve element unit moves to the position facing the second opening, the rotation of the support in the other direction is hindered by the stopper, so that the valve element unit is positioned at a proper position.

Then, in this reference state, when the eccentric shaft part is rotated while the support is fixed so as not to rotate, the valve element unit moves radially outward by a distance based on the eccentricity amount of the eccentric shaft portion of the eccentric shaft part to be seated on the second opening. At this time, the second opening is closed while airtightly sealed by the second sealing member. On the other hand, when the eccentric shaft part rotates in the reverse direction, the valve element unit moves radially inward, so that the second opening is opened.

As described above, according to the present invention, a radially outward movement amount of the valve element unit depends on the eccentricity amount of the eccentric shaft portion of the eccentric shaft part. Therefore, it is possible to easily control the radially outward movement amount of the valve element unit to a fixed amount, only by setting the eccentricity amount of the eccentric shaft portion of the eccentric shaft part to a predetermined value. Therefore, with a simple structure, a constant pressing amount of the sealing members to the openings is achieved, and further an impact force of the sealing members to the openings can be reduced. As a result, it is possible to retard the deterioration of product life of the sealing members and further to prevent the generation of particles ascribable to the sealing members. Further, since the rotation of the support is stopped by the stopper when the valve element unit is at the positions facing the openings, positional deviation of the valve element unit from the openings can be prevented. This ensures that the openings are closed and airtightly sealed.

In the invention according to claim 3, the rotation of the support is controlled by the magnitude relation between the rotational force applied to the support from the rotational force applier and the driving force from the driving source. Concretely, when the rotational force applied to the support from the rotational force applier and the driving force from the driving source compete with each other (when the forces act in opposite directions), the support and the valve element unit rotate in a direction in which a larger one of the rotational force and the driving force acts. Further, when the rotational force applied to the support from the rotational force applier and the driving force from the driving source act in the same direction, the support and the valve element unit rotate in the direction in which the rotational force and the driving force act. Therefore, by adjusting one of the rotational force from the rotational force applier and the driving force from the driving source, it is possible to easily control the rotation of the support.

In the invention according to claim 4, since the spiral spring is used as the rotational force applier, it is possible to apply the rotational force in one direction to the support from the spiral spring. This makes it possible to rotary drive the support and the eccentric shaft part in linkage with each other and to rotate the eccentric shaft part independently of the support by the driving source. As a result, it is possible to drive different driving mechanisms, that is, a rotating mechanism and a lifting mechanism by one driving mechanism. Further, since the spiral spring is used, it is possible to easily form the rotational force applier by using an existing component. This realizes a simple structure and a reduced manufacturing cost of the valve device.

### Brief Description of Drawings

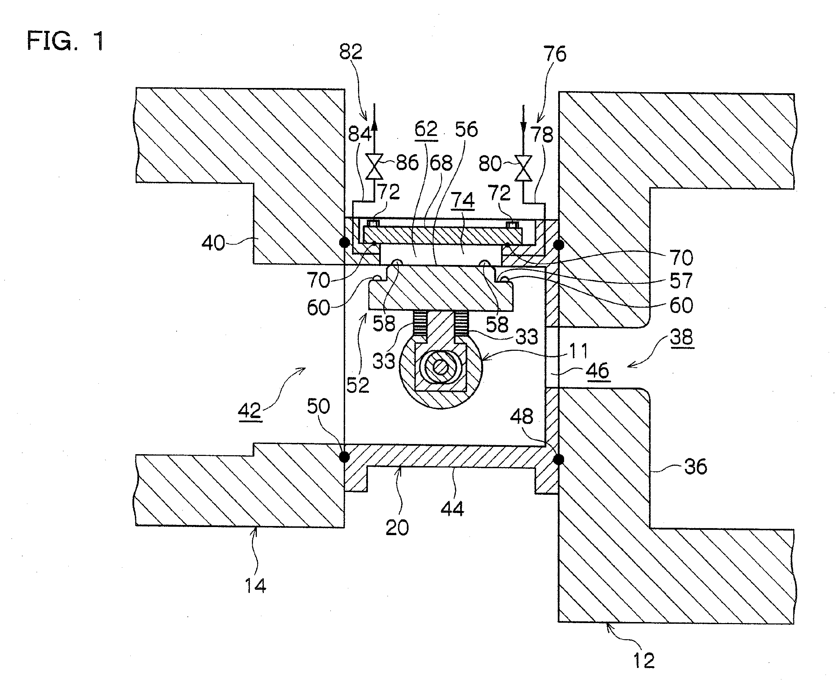

[FIG. 1] is an enlarged cross-sectional view showing a state where a gate valve device according to a first embodiment of the present invention is mounted;

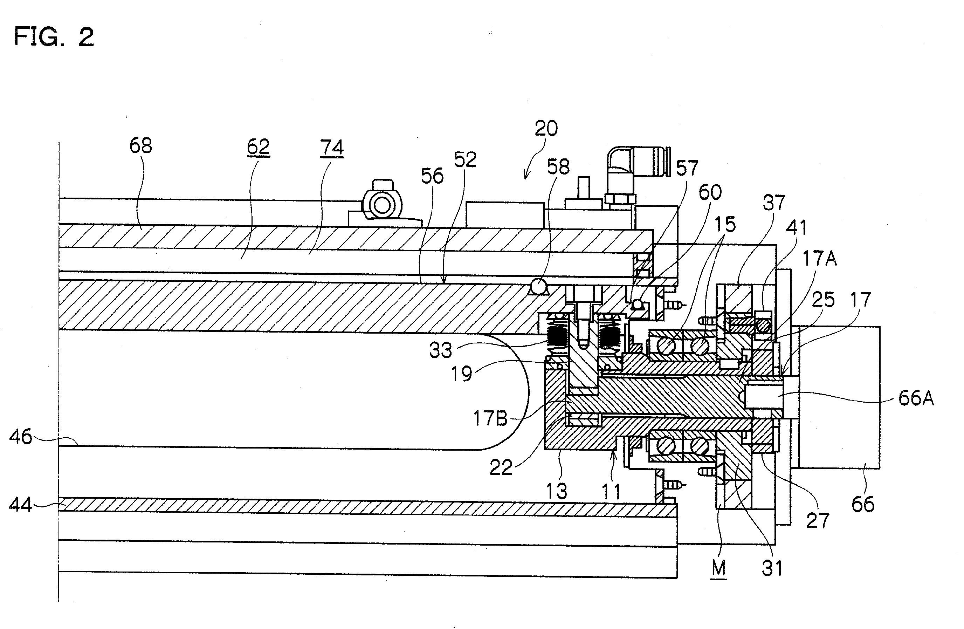

[FIG. 2] is a partial enlarged view showing an essential part of the gate valve device according to the first embodiment of the present invention;

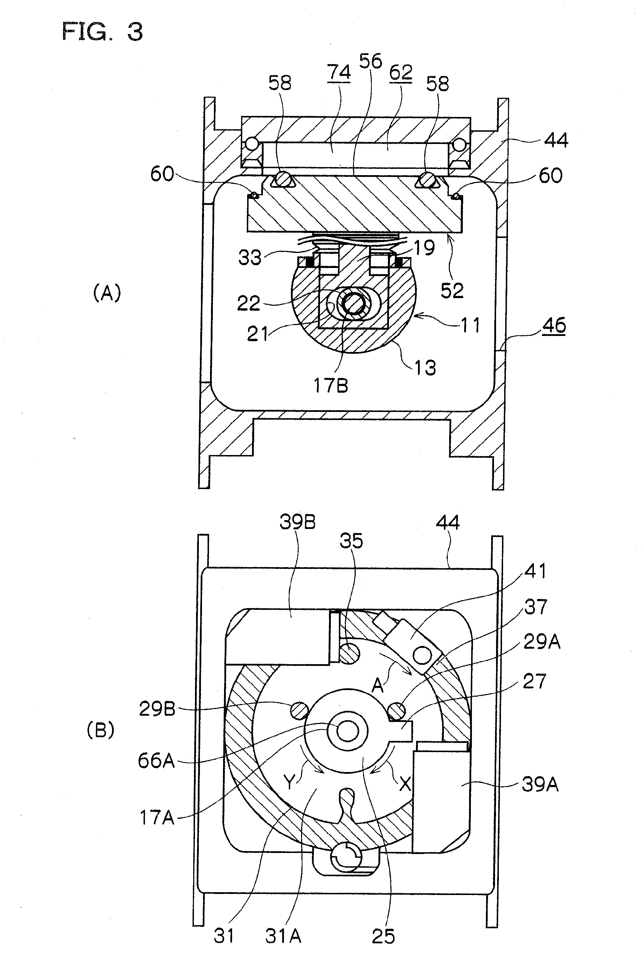

[FIG. 3] (A) is a cross-sectional view showing the position of a valve element unit of the gate valve device according to the first embodiment of the present invention in an OPEN state, and (B) is a view showing a positional relation between an eccentric shaft part and a support in the above state;

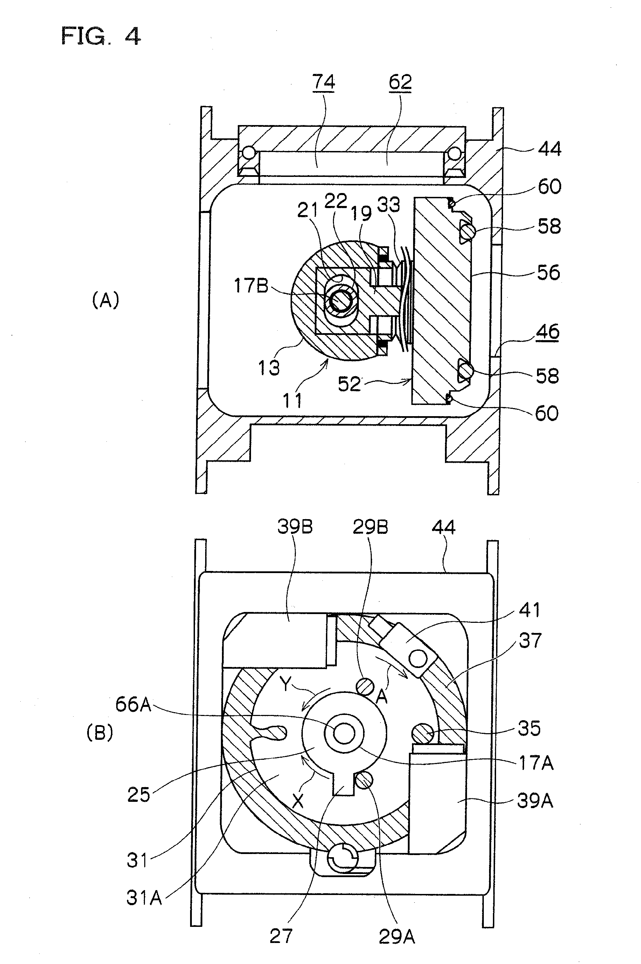

[FIG. 4] (A) is a cross-sectional view showing the position of the valve element unit of the gate valve device according to the first embodiment of the present invention in a 90-degree rotated state from the OPEN state, and (B) is a view showing a positional relation between the eccentric shaft part and the support in the above state;

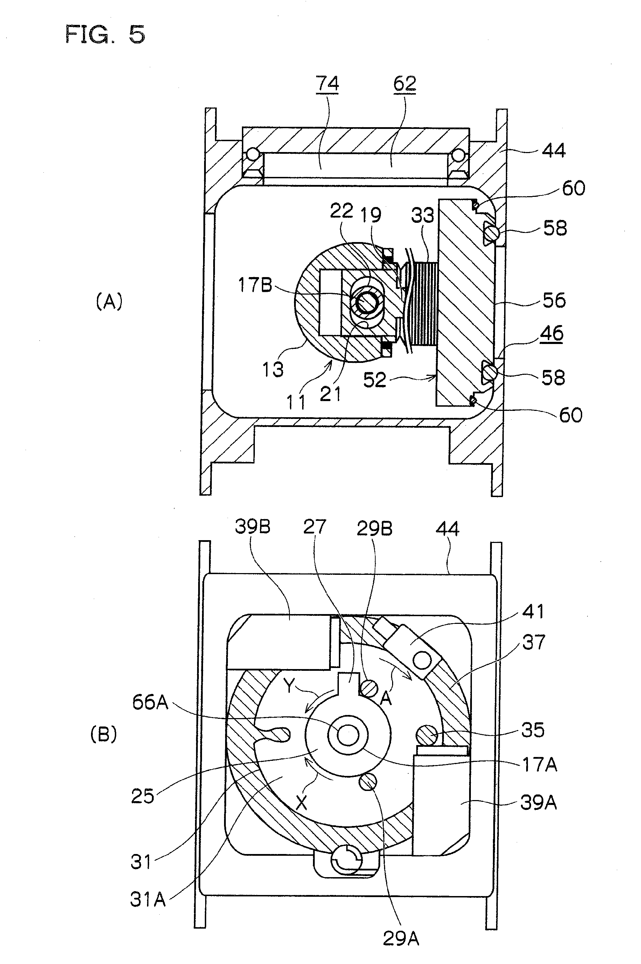

[FIG. 5] (A) is a cross-sectional view showing the position of the valve element unit of the gate valve device according to the first embodiment of the present invention when the valve element unit closes a first opening, and (B) is a view showing a positional relation between the eccentric shaft part and the support in the above state;

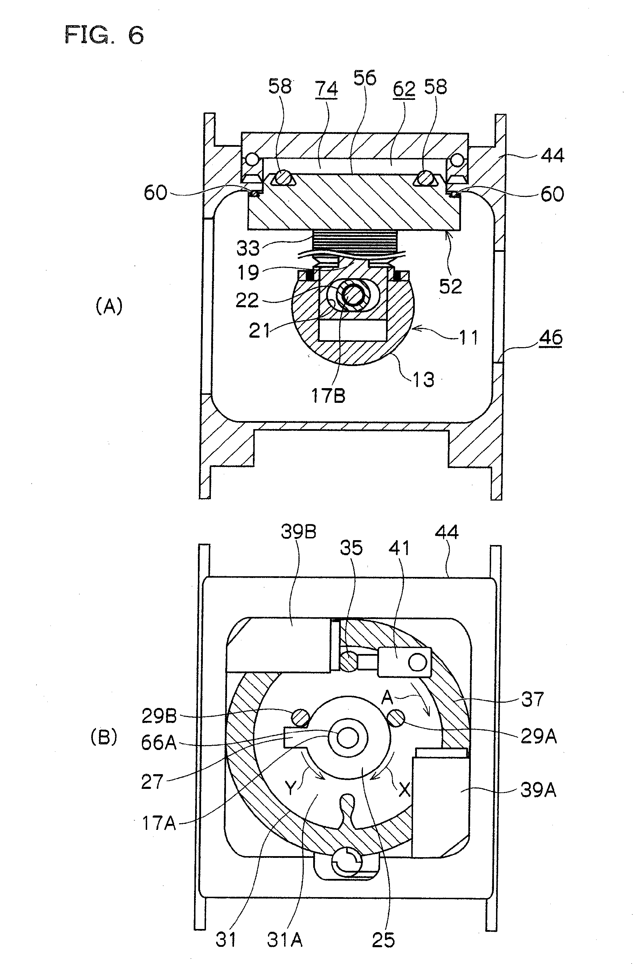

[FIG. 6] (A) is a cross-sectional view showing the position of the valve element unit of the gate valve device according to the first embodiment of the present invention when the valve element unit closes a second opening, and (B) is a view showing a positional relation between the eccentric shaft part and the support in the above state;

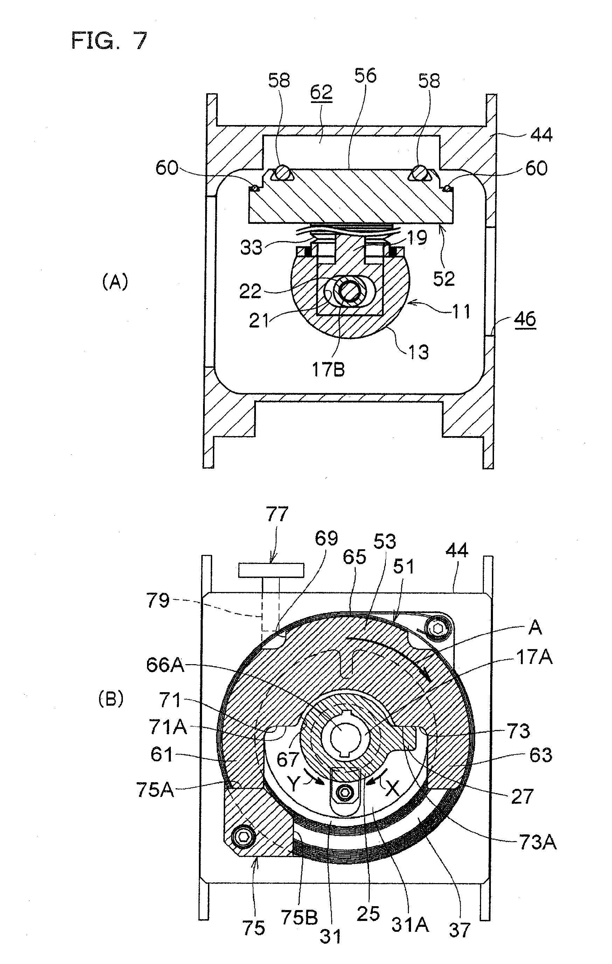

[FIG. 7] (A) is a cross-sectional view showing the position of a valve element unit of a gate valve device according to a second embodiment of the present invention in an OPEN state, and (B) is a view showing a positional relation between an eccentric shaft part and a support in the above state;

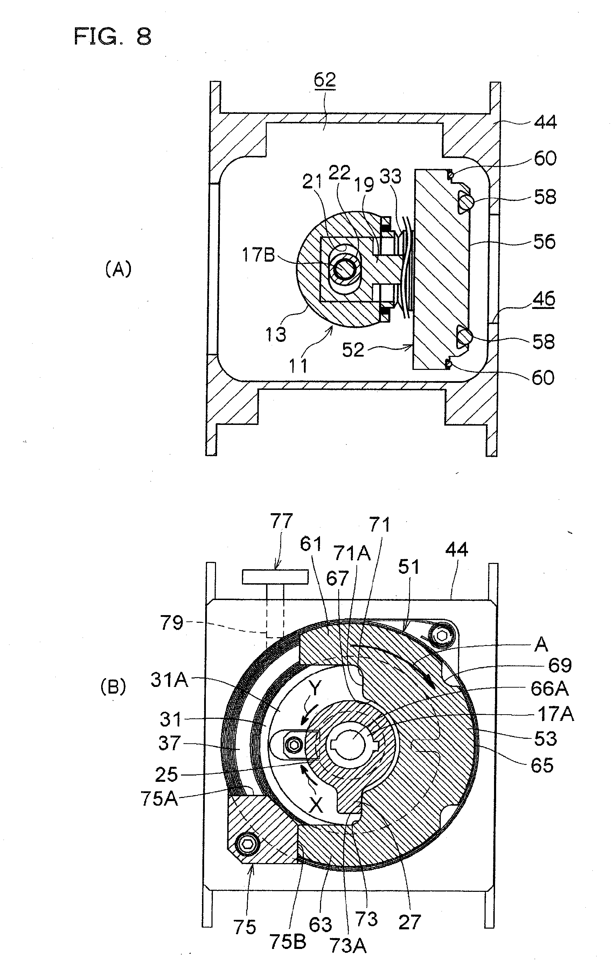

[FIG. 8] (A) is a cross-sectional view showing the position of the valve element unit of the gate valve device according to the second embodiment of the present invention in a 90-degree rotated state from the OPEN state, and (B) is a view showing a positional relation between the eccentric shaft part and the support in the above state;

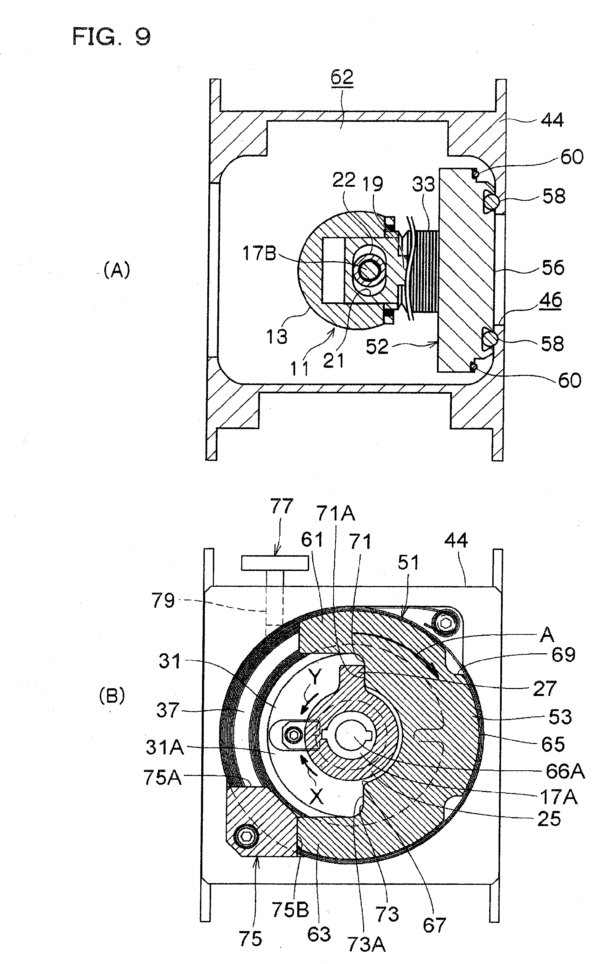

[FIG. 9] (A) is a cross-sectional view showing the position of the valve element unit of the gate valve device according to the second embodiment of the present invention when the valve element unit closes a first opening, and (B) is a view showing a positional relation between the eccentric shaft part and the support in the above state;

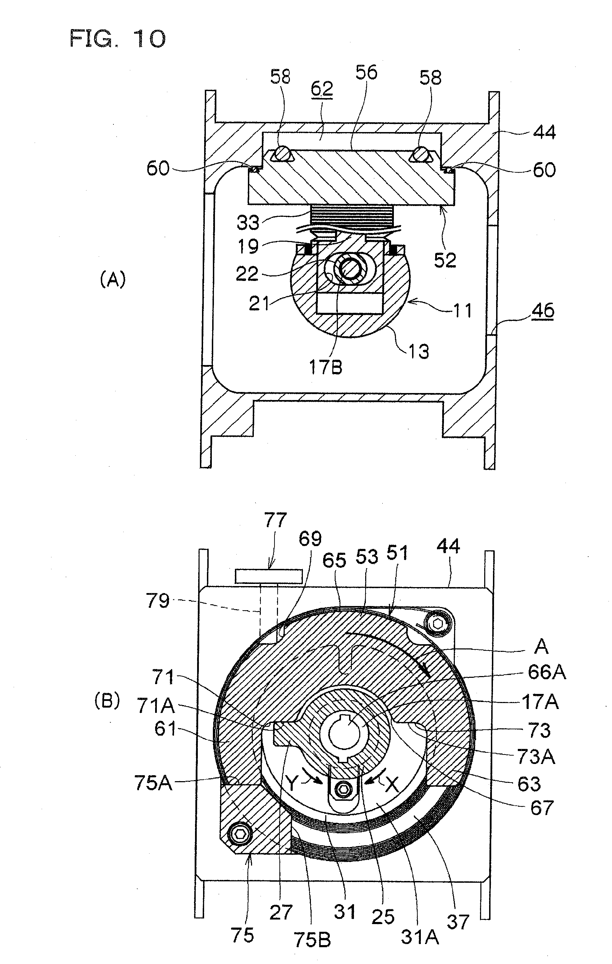

[FIG. 10] (A) is a cross-sectional view showing the position of the valve element unit of the gate valve device according to the second embodiment of the present invention when the valve element unit closes a second opening, and (B) is a view showing a positional relation between the eccentric shaft part and the support in the above state;
[FIG. 11] is a partial cross-sectional view of a gate valve device of a conventional art; and
[FIG. 12] is a perspective view seen from the front side, showing a state where a valve element and a valve element driving mechanism of the gate valve device of the conventional art are attached.

### Explanation of Codes

- 11: valve element driving mechanism (valve element driving unit)
- 12: process chamber
- 13: support
- 17: eccentric shaft (eccentric shaft part)
- 17B: eccentric shaft portion
- 20: gate valve device (valve device)
- 27: claw
- 29A: positioning pin
- 29B: positioning pin
- 35: rotation restricting pin (stopper)
- 37: spiral spring (rotational force applier)
- 38: transfer port (chamber port)
- 39A: stopper member (stopper)
- 39B: stopper member (stopper)
- 44: casing
- 46: first opening (opening)
- 51: cylindrical flange (stopper)
- 52: valve element unit
- 56: first sealing surface
- 57: second sealing surface
- 58: valve element sealing part (first sealing member, sealing member)
- 60: maintenance sealing part (second sealing member)
- 62: maintenance port (second opening)
- 66: driving motor (driving source)
- 75: rotation stopper (stopper)

### Best Mode for Carrying out the Invention

Next, a gate valve device according to a first embodiment of the present invention will be described with reference to the drawings. The following embodiment describes a form where the present invention is applied to the gate valve device as an example of a valve device.

As shown in FIG. 1, in a sidewall 36 defining a process chamber 12, a slender transfer port 38 through which a semiconductor wafer is passed to be loaded/unloaded is formed, and an opening 42 is formed also in a sidewall 40 defining a transfer chamber 14 communicatable with the process chamber 12. The gate valve device 20 has a casing 44 in a substantially rectangular parallelepiped shape made of, for example aluminum. On one side of the casing 44, a slender first opening 46 communicating with the inside of the process chamber 12 is formed. On joint surfaces of the casing 44 joined to the process chamber 12 and the transfer chamber 14, O-rings 48, 50 are interposed respectively, so that airtightness can be maintained.

In the casing 44, a valve element unit 52 and a valve element driving mechanism 11 driving the valve element unit 52 are provided, and the valve element unit 52 is seated on the first opening 46 to be capable of airtightly sealing the first opening 46 when necessary. Since the first opening 46 and the transfer port 38 integrally communicate with each other, the transfer port 38 is also opened/closed when the first opening 46 is opened/closed.

Concretely, a planar first sealing surface 56 closing or opening the first opening 46 and a planar second sealing surface 57 closing or opening a later described maintenance port (second opening) 62 are formed in the valve element unit 52. On the first sealing surface 56, a valve element sealing part (first sealing member) 58 is provided to airtightly seal the first opening 46 when the valve element unit 52 closes the first opening 46. Further, on the second sealing surface 57, a maintenance sealing part (second sealing member) 60 is provided outside the valve element sealing part 58 to airtightly seal the maintenance port 62 when the valve element unit 52 closes the maintenance port 62. The valve element sealing part 58 and the maintenance sealing part 60 are preferably O-rings.

The first sealing surface 56 of the valve element unit 52 is formed substantially in the same shape as that of the first opening 46. The aforesaid valve element sealing part 58 is fit along an edge of the first sealing surface 56. Further, the second sealing surface 57 of the valve element unit 52 is formed substantially in the same shape as that of the maintenance port 62. The maintenance sealing part 60 is fit along an edge of the second sealing surface 57.

Further, the valve element driving mechanism (valve element driving unit) 11 for rotating the valve element unit 52 or moving the valve element unit 52 in a radial direction relative to the casing 44 is attached near longitudinal both ends of the valve element unit 52.

Here, the structure of the valve element driving mechanism 11 driving the valve element unit 52 will be described in detail.

As shown in FIG. 2, a support 13 is attached to the longitudinal both ends of the valve element unit 52. The support 13 is formed in a hollow shape. The support 13 is rotatably supported by bearing parts 15 of the casing 44. Further, on an inner side of the support 13, an eccentric shaft (eccentric shaft part) 17 is rotatably disposed via a bearing part (not shown). The eccentric shaft 17 is composed of a shaft main body portion 17A and an eccentric shaft portion 17B whose center is located at a position a predetermined distance apart from a center (axial center) of the shaft main body portion 17A. On an outer periphery of the eccentric shaft portion 17B, a roller 22 is disposed via a sliding bearing (not shown) and a support piece 19 extending in the radial direction is attached. Specifically, the support piece 19 has an insertion portion 21 to which the roller 22 is inserted, and the eccentric shaft portion 17B is rotatably connected to the support piece 19 via the roller 22. A radial-direction outer end of the aforesaid support piece 19 is connected to the valve element unit 52. The support piece 19 and the valve element unit 52 are connected by a fixing member such as a short screw or a screw. Further, bellows 33 which stretch when the valve element unit 52 moves radially outward and contracts when the valve element unit 52 moves radially inward are attached to the support 13.

Further, as shown in FIG. 2 to FIG. 4, a ring-shaped member 25 is attached to an end portion of the shaft main body portion 17A. The ring-shaped member 25 has a claw 27.

Further, a flange 31 with a widened diameter is attached to an outer periphery of one end portion of the support 13. The flange 31 is disposed in a housing space M formed in the casing 44. A plurality of pins projecting in an axial direction are attached to one axial-direction-side plane 31A of the flange 31. Specifically, in this embodiment, the three pins are attached to the flange 31, and the pins are one rotation restricting pin 35 and two positioning pins 29A, 29B. Among them, the two positioning pins 29A, 29B are attached at positions whose distances from a center of the axial-direction-side plane 31A of the flange 31 are equal. Further, the rotation restricting pin 35 among the three pins is attached to a position whose distance from the center of the axial-direction-side plane 31A of the flange 31 is larger, compared with the other two positioning pins 29A, 29B. Further, the position at which the positioning pin 29A is attached is deviated rightward from the rotation restricting pin 35 by a predetermined angle, and the position at which the other positioning pin 29B is attached is deviated leftward from the rotation restricting pin 35 by a predetermined angle. The opening angle between the positioning pin 29A and the rotation restricting pin 35 and the opening angle between the other positioning pin 29B and the rotation restricting pin 35 are set substantially equal.

Further, at a position which is inside the housing space M of the casing 44 and is on the radially outer side of the flange 31, a spiral spring (rotational force applier) 37 is disposed. The spiral spring 37 is in contact with an outer peripheral surface of the flange 31, and a resilient force of the spiral spring 37 is applied to the outer peripheral surface of the flange 31 so that the flange 31 rotates in a predetermined direction (arrow A direction in FIG. 3). In this manner, the flange 31 is constantly given a rotational force from the spiral spring 37 so as to rotate in one direction (arrow A direction in FIG. 3).

Further, two stopper members (stoppers) 39A, 39B coming into contact with the rotation restricting pin 35 of the flange 31 but not coming into contact with the positioning pins 29A, 29B are attached to the casing 44. The stopper members 39A, 39B are disposed at positions so as to allow the 90-degree rotation of the support 13. That is, the stopper member 39B is in contact with the rotation restricting pin 35 of the support 13 when the valve element unit 52 is at a position facing the maintenance port 62, and the other stopper member 39A is in contact with the rotation restricting pin 35 of the support 13 when the valve element unit 52 is at a position facing the first opening 46, thereby restricting the rotation of the support 13.

Further, a locking member 41 is attached to the casing 44. The locking member 41 is attached to be rotatable on its end, and when the other end of the locking member 41 moves radially inward, the rotation restricting pin 35 of the flange 31 is sandwiched by the stopper member 39B and the locking member 41 to be locked. The rotation of the locking member 41 is controlled by a not-shown control mechanism or is controlled manually.

Further, a driving motor (driving source) 66 is attached to the casing 44. The driving motor 66 includes a motor rotating shaft 66A rotating in a positive direction and a reverse direction. The motor rotating shaft 66A is connected to the shaft main body portion 17A of the eccentric shaft 17, so that the eccentric shaft 17 is capable of rotating in one direction (arrow X direction in FIG. 3) and the reverse direction (arrow Y direction in FIG. 3) when the motor rotating shaft 66A rotates.

Further, as shown in FIG. 1 and FIG. 2, in a ceiling of the casing 44, the slender maintenance port 62 for the replacement of the valve element sealing part 58 is formed. Concretely, the size of the maintenance port 62 is set so that, when the valve element unit 52 is seated on a seating surface around the maintenance port 62, the outer maintenance sealing part 60 is in contact with the seating surface to be capable of airtightly sealing the maintenance port 62 while only the inner valve element sealing part 58 is exposed. In other words, the maintenance port 62 is formed slightly larger in width than the aforesaid first opening 46. The maintenance sealing part 60 airtightly seals the maintenance port 62, and the inner valve element sealing part 58 is exposed in the maintenance port 62.

Further, as shown in FIG. 1, on a peripheral portion of the maintenance port 62, a maintenance cover 68 is airtightly mounted from the outside via an O-ring 70. In this case, the maintenance cover 68 is attachably/detachably mounted by a plurality of bolts 72. Further, using, for example, a transparent plate made of an acrylic resin plate or the like as the maintenance cover 68 makes it possible to visually check a deterioration degree of the valve element sealing part 58 from the outside without detaching the maintenance cover 68. In this case, a transparent window enabling the visual check of the inside may be provided in part of the maintenance cover 68.

Further, a gas feeding system 76 is provided in order to return, to the atmospheric pressure, the inside of a gap 74, which is formed between the maintenance cover 68 and the seated valve element unit 52, when the valve element unit 52 is seated to close the maintenance port 62. Concretely, as shown in FIG. 1, the gas feeding system 76 has: a flow path 78 which is provided on a defining wall defining the maintenance port 62 and through which the gap 74 communicates with the outside; and an opening/closing valve 80 provided in the flow path 78, and thus the gas feeding system 76 is capable of feeding N₂ gas, purified air, or the like when necessary.

Further, as shown in FIG. 1, a gap vacuum exhaust system 82 for evacuating the inside of the gap 74 is provided. This gap vacuum exhaust system 82 has: a flow path 84 which is provided in the defining wall defining the maintenance port 62 and through which the gap 74 communicates with the outside; and an opening/closing valve 86 provided in the flow path 84, and thus the gap vacuum exhaust system 82 is capable of exhausting the atmosphere in the gap 74 to vacuum when necessary.

Next, the operation of the gate valve device 20 of the first embodiment will be described. In the description of the operation of this embodiment, a state where the valve element unit 52 is at the position facing the maintenance port 62 (OPEN state) is defined as a reference state.

As shown in FIG. 2 and FIG. 3, in the state where the valve element unit 52 is at the position facing the maintenance port 62 (OPEN state), the eccentric shaft portion 17B of the eccentric shaft 17 is located opposite (on a radial-direction inner side of) the maintenance port 62, with respect to the center of the rotation. Further, in the OPEN state, the positioning pin 29A of the flange 31 and the claw 27 of the ring-shaped member 25 are in contact with each other. Further, in the OPEN state, a predetermined resilient force from the spiral spring 37 acts on the outer peripheral surface of the flange 31, so that the support 13 tries to rotate in the predetermined direction (arrow X direction in FIG. 3). The support 13 is capable of resisting the resilient force from the spiral spring 37 when the driving of the driving motor 66 is stopped or the rotational driving force from the driving motor 66 is made to act on the eccentric shaft 17 in the opposite direction of the arrow A direction in FIG. 3, which makes it possible to position the valve element unit 52 at a predetermined position.

Next, as shown in FIG. 4, when the motor rotating shaft 66A of the driving motor 66 is driven in a positive direction (arrow X direction in FIG. 4), the eccentric shaft 17 rotates. Accordingly, the ring-shaped member 25 and the claw 27 rotate. At this time, since the predetermine resilient force from the spiral spring 37 acts on the outer peripheral surface of the flange 31, the positioning pin 29A of the flange 31 rotates following the claw 27, and the support 13 rotates in the predetermined direction (arrow X direction in FIG. 4). That is, the support 13 rotates with the eccentric shaft 17. Then, when the support 13 rotates 90 degrees with the eccentric shaft 17, the rotation restricting pin 35 of the flange 31 comes into contact with the stopper member 39A, so that further rotation of the support 13 is hindered even if the resilient force from the spiral spring 37 acts. At this time, the valve element unit 52 has moved to the position facing the first opening 46 as shown in FIG. 4.

As shown in FIG. 5, when the motor rotating shaft 66A of the driving motor 66 further rotates in the positive direction from the 90-degree position shown in FIG. 4, the eccentric shaft 17 receives the rotational driving force of the driving motor 66 and thus only the eccentric shaft 17 rotates in the predetermined direction (arrow X direction in FIG. 5). At this time, being stopped by the stopper member 39A, the support 13 does not rotate. When the eccentric shaft 17 rotates 180 degrees from the 90-degree position shown in FIG. 4, the eccentric shaft portion 17B of the eccentric shaft 17 moves toward the first opening 46 (radially outward) by a distance equal to twice its eccentricity amount (corresponding to a diameter dimension of the eccentric shaft portion 17B). Consequently, the valve element unit 52 is seated on the first opening 46 to close the first opening 46 (CLOSE state). At this time, the valve element sealing part 58 is elastically deformed due to a pressing force of the valve element unit 52.

On the other hand, in order to open the first opening 46 from the state where the valve element unit 52 is seated on the first opening 46 and closes the first opening 46, the motor rotating shaft 66A of the driving motor 66 is rotated in the reverse direction (arrow Y direction in FIG. 5) to rotate the eccentric shaft 17 in the reverse direction (arrow Y direction in FIG. 5). At this time, since the resilient force acting in one direction (arrow X direction in FIG. 5) is applied to the support 13 from the spiral spring 37, the support 13 does not rotate following the eccentric shaft 17. Therefore, only the eccentric shaft 17 rotates. When the eccentric shaft 17 is rotated 180 degrees in the reverse direction (arrow Y direction in FIG. 5), the eccentric shaft portion 17B of the eccentric shaft 17 moves toward the opposite side of the first opening 46 (radially inward) by the distance equal to twice its eccentricity amount (corresponding to the diameter dimension of the eccentric shaft portion 17B) to return to the 90-degree position shown in FIG. 4. Consequently, the first opening 46 is opened.

When the motor rotating shaft 66A of the driving motor 66 is further rotated in the reverse direction (arrow Y direction in FIG. 5) from the 90-degree position in FIG. 4, the eccentric shaft 17 rotates, but since it rotates while the claw 27 of the ring-shaped member 25 attached to the eccentric shaft 17 and the positioning pin 29A of the flange 31 are in contact with each other, the eccentric shaft 17 rotates with the support 13 in the predetermined direction (arrow Y direction in FIG. 4). At this time, the resilient force from the spiral spring 37 acts on the outer peripheral surface of the flange 31 attached to the support 13, but since the rotational driving force of the driving motor 66 is larger than the resilient force from the spiral spring 37, the support 13 rotates while resisting the resilient force from the spiral spring 37. Then, the support 13 rotates 90 degrees with the eccentric shaft 17 to return to the position shown in FIG. 3. Consequently, the valve element unit 52 moves to the position facing the maintenance port 62.

Here, in order to close the maintenance port 62 by the valve element unit 52, the locking member 41 is rotated so that the rotation restricting pin 35 of the flange 31 is sandwiched by the stopper member 39B and the locking member 41 as shown in FIG. 6. In this state, the motor rotating shaft 66A of the driving motor 66 is rotated in the positive direction. Since the rotation of the support 13 is hindered by the locking member 41, the rotation of the motor rotating shaft 66A of the driving motor 66 in the positive direction (arrow X direction in FIG. 6) causes only the eccentric shaft 17 to rotate 180 degrees in the positive direction (arrow X direction in FIG. 6) until the claw 27 comes into contact with the positioning pin 29B. When only the eccentric shaft 17 rotates 180 degrees, the eccentric shaft portion 17B of the eccentric shaft 17 moves toward the maintenance port 62 (radially outward) by the distance equal to twice its eccentricity amount (corresponding to the diameter dimension of the eccentric shaft portion 17B). Consequently, the valve element unit 52 is seated on the maintenance port 62 to close the maintenance port 62. At this time, in the state where the valve element unit 52 is seated on the maintenance port 62, the maintenance sealing part 60 is elastically deformed due to the pressing force of the valve element unit 52, so that the maintenance port 62 is airtightly sealed (maintenance state). In order to open the maintenance port 62, the motor rotating shaft 66A of the driving motor 66 is rotated in the reverse direction (arrow Y direction in FIG. 5) as described above. At this time, the rotation of the support 13 is in a stopped state since the rotation restricting pin 35 of the flange 31 of the support 13 is sandwiched between the stopper member 39B and the locking member 41.

As described above, according to the gate valve device 20 of this embodiment, a radially outward movement amount of the valve element unit 52 depends on the eccentricity amount of the eccentric shaft portion 17B of the eccentric shaft 17. Therefore, only by setting the eccentricity amount of the eccentric shaft portion 17B of the eccentric shaft 17 to a predetermined value, it is possible to easily control the radially outward movement amount of the valve element unit 52 to a fixed amount. Accordingly, with a simple structure, a constant pressing amount of the sealing members 58, 60 to the openings 46, 62 is achieved and further an impact force of the sealing members 58, 60 to the openings 46, 52 can be reduced. As a result, it is possible to retard deterioration of product life of the sealing members 58, 60 and further to prevent the generation of particles ascribable to the sealing members 58, 60.

Further, since the spiral spring 37 is used as a means for causing the 90-degree rotation of the support 13, it is possible to apply the resilient force acting on the support 13 in one direction from the spiral spring 37. Consequently, it is possible to rotary drive the support 13 and the eccentric shaft 17 in linkage with each other and to rotate the eccentric shaft 17 independently of the support 13. As a result, different driving mechanisms, that is, a rotating mechanism and a lifting mechanism can be controlled by one driving source. Further, since the spiral spring 37 is used, it is possible to easily form the rotational force applier by using an existing component. Consequently, the gate valve device 20 can have a simple and compact structure and its manufacturing cost can be reduced as well. Further, since the rotation of the support 13 is stopped by the stoppers 39A, 39B and the rotation restricting pin 35 when the valve element unit 52 is at the positions facing the first opening 46 and the maintenance port 62, the positional deviation of the valve element unit 52 from the first opening 46 and the maintenance port 62 can be prevented. This ensures that the first opening 46 and the maintenance opening 62 are closed and airtightly sealed.

Next, a gate valve device according to a second embodiment of the present invention will be described with reference to the drawings. The same structures as the structures of the gate valve device according to the first embodiment will be denoted by the same reference numerals and symbols and description thereof will be omitted when appropriate.

As shown in FIG. 7 to FIG. 10, the plural pins are not attached to one axial-direction-side plane 31A of a flange 31 of the gate valve device of the second embodiment. Concretely, though the structure is described that the single rotation restricting pin 35 and the two positioning pins 29A, 29B are provided on the axial-direction-side plane 31A of the flange 31 of the gate valve device of the first embodiment, these pins are not provided at all on the axial-direction-side plane 31A of the flange 31 of the gate valve device of the second embodiment.

Here, on the axial-direction-side plane 31A of the flange 31 of the gate valve device of the second embodiment, a cylindrical flange (stopper) 51 is attached instead of the pins. The cylindrical flange 51 is composed of a semicircular flange main body 53 and two first hook 61 and second hook 63 integrally formed with the flange main body 53. The semicircular flange main body 53 has a curved outer peripheral portion 65 greatly projecting outward and a groove-shaped inner peripheral portion 67 smaller in diameter than the outer peripheral portion 65. A groove 69 in which a shaft portion 79 of a later-described maintenance handle 77 enters for engagement is formed in the outer peripheral portion 65. Further, the inner peripheral portion 67 is formed so that on a radially inner side thereof, part of a ring-shaped member 25 is housable.

Further, the first hook 61 and the second hook 63 are integrally formed to extend from the outer peripheral portion 65 of the flange main body 53. Further, the flange main body 53 has two first positioning part 71 and second positioning part 73 formed at positions on a radially inner side of the hooks 61, 63. In the positioning parts 71, 73, contact surfaces 71A, 73A capable of coming into contact with a claw 27 of the ring-shaped member 25 are formed. When the claw 27 of the ring-shaped member 25 comes into contact with the contact surfaces 71A, 73A, the ring-shaped member 25 is stopped and a valve element unit 52 is positioned at a proper position. In this manner, the cylindrical flange 51 is composed of the semicircular flange main body 53 and the first hook 61 and second hook 63 integrally formed with the flange main body 53, and is formed in a U-shape as a whole.

Further, one rotation stopper (stopper) 75 is attached to a casing 44 of the gate valve device of the second embodiment, instead of the two stopper members 39A, 39B provided on the casing 44 of the gate valve device of the first embodiment. In the rotation stopper 75, a first stopper surface 75A with which the first hook 61 comes into contact and a second stopper surface 75B with which the second hook 63 comes into contact are formed. Therefore, when the first hook 61 comes into contact with the first stopper surface 75A or the second hook 63 comes into contact with the second stopper surface 75B, the rotation of the flange 31 and the cylindrical flange 51 is stopped and the valve element unit 52 is positioned at the proper position. Further, the maintenance handle 77 hindering the rotation of a support 13 is provided in the casing 44.

Further, what is common to the first embodiment is that a spiral spring 37 is disposed at a position which is inside a housing space M of the casing 44 and is on a radially outer side of the flange 31.

Next, the operation of the gate valve device of the second embodiment will be described. In the description of the operation of this embodiment, a state where the vale element unit 52 is at a position facing a maintenance port 62 (OPEN state) is defined as a reference state. Note that when the support 13 rotates, the shaft portion 79 of the maintenance handle 77 is not inserted in the groove 69 but the maintenance handle 77 is located at a retreat position away from the groove 69.

As shown in FIG. 7, in the state where the valve element unit 52 is at the position facing the maintenance port 62 (OPEN state), an eccentric shaft portion 17B of an eccentric shaft 17 is located opposite (on a radially inner side of) the maintenance port 62, with respect to the rotation center. Further, in the OPEN state, the contact surface 73A of the positioning part 73 and the claw 27 of the ring-shaped member 25 are in contact with each other. Further, in the OPEN state, a predetermined resilient force from the spiral spring 37 acts on an outer peripheral surface of the flange 31 in the arrow A direction in FIG. 7, so that the support 13 tries to rotate in a predetermined direction (arrow X direction in FIG. 7). The support 13 is capable of resisting the resilient force from the spiral spring 37 when the driving of the driving motor 66 is stopped or the rotational driving force from the driving motor 66 is made to act in the arrow Y direction in FIG. 7 on the eccentric shaft 17, which makes it possible to position the valve element unit 52 at a predetermined position.

Next, as shown in FIG. 8, when the motor rotating shaft 66A of the driving motor 66 is driven in the positive direction (arrow X direction in FIG. 8), the eccentric shaft 17 rotates in the positive direction (arrow X direction in FIG. 8). Accordingly, the ring-shaped member 25 and the claw 27 rotate. At this time, since the predetermine resilient force from the spiral spring 37 acts on the outer peripheral surface of the flange 31, the second positioning part 73 of the cylindrical flange 51 rotates following the claw 27, and the support 13 rotates in the predetermined direction (arrow X direction in FIG. 8). That is, the support 13 rotates with the eccentric shaft 17. Then, when the support 13 rotates 90 degrees with the eccentric shaft 17, the second hook 63 of the cylindrical flange 51 comes into contact with the second stopper surface 75B of the rotation stopper 75, so that further rotation of the support 13 is hindered even if the resilient force from the spiral spring 37 acts. At this time, the valve element unit 52 has moved to the position facing the first opening 46 as shown in FIG. 8.

As shown in FIG. 9, when the motor rotating shaft 66A of the driving motor 66 further rotates in the positive direction from the 90-degree position shown in FIG. 8, the eccentric shaft 17 receives the rotational driving force of the driving motor 66 and thus only the eccentric shaft 17 rotates in the predetermined direction (arrow X direction in FIG. 9). At this time, being stopped by the rotation stopper 75, the support 13 does not rotate. When the eccentric shaft 17 rotates 180 degrees from the 90-degree position shown in FIG. 8, the eccentric shaft portion 17B of the eccentric shaft 17 moves toward the first opening 46 (radially outward) by a distance equal to twice its eccentricity amount (corresponding to a diameter dimension of the eccentric shaft portion 17B). Consequently, the valve element unit 52 is seated on the first opening 46 to close the first opening 46 (CLOSE state). At this time, the valve element sealing part 58 is elastically deformed due to a pressing force of the valve element unit 52.

On the other hand, in order to open the first opening 46 from the state where the valve element unit 52 is seated on the first opening 46 to close the first opening 46, the motor rotating shaft 66A of the driving motor 66 is rotated in the reverse direction (arrow Y direction in FIG. 9) to rotate the eccentric shaft 17 in the reverse direction (arrow Y direction in FIG. 9). At this time, since the resilient force acting in one direction (arrow X direction in FIG. 9) is applied to the support 13 from the spiral spring 37, the support 13 does not rotate following the eccentric shaft 17. Therefore, only the eccentric shaft 17 rotates. When the eccentric shaft 17 rotates 180 degrees in the reverse direction (arrow Y direction in FIG. 9), the eccentric shaft portion 17B of the eccentric shaft 17 moves toward the opposite side of the first opening 46 (radially inward) by the distance equal to twice its eccentricity amount (corresponding to the diameter dimension of the eccentric shaft portion 17B) to return to the 90-degree position shown in FIG. 8. Consequently, the first opening 46 is opened.

When the motor rotating shaft 66A of the driving motor 66 is further rotated from the 90-degree position in FIG. 8 in the reverse direction (arrow Y direction in FIG. 8), the eccentric shaft 17 rotates, but since it rotates while the claw 27 of the ring-shaped member 25 attached to the eccentric shaft 17 is in contact with the contact surface 73A of the second positioning part 73 of the cylindrical flange 51, the eccentric shaft 17 rotates with the support 13 in the predetermined direction (arrow Y direction in FIG. 8). At this time, the resilient force from the spiral spring 37 acts on the outer peripheral surface of the flange 31 attached to the support 13, but since the rotational driving force of the driving motor 66 is larger than the resilient force from the spiral spring 37, the support 13 rotates while resisting the resilient force from the spiral spring 37. Then, the support 13 rotates 90 degrees with the eccentric shaft 17 to return to the position shown in FIG. 7. At this time, the first hook 61 of the cylindrical flange 51 comes into contact with the first stopper surface 75A of the rotation stopper 75, so that further rotation of the support 13 is hindered. Consequently, the valve element unit 52 moves to the position facing the maintenance port 62.

Here, in order to close the maintenance port 62 by the valve element unit 52, the motor rotating shaft 66A of the driving motor 66 is rotated in the positive direction (arrow X direction in FIG. 10) in the state where the shaft portion 79 of the maintenance handle 77 shown in FIG. 10 enters the groove 69 for engagement to fix the support 13 and prevent its rotation. Since the rotation of the support 13 is hindered by the maintenance handle 77, the rotation of the motor rotating shaft 66A of the driving motor 66 in the positive direction (arrow X direction in FIG. 10) causes only the eccentric shaft 17 to rotate 180 degrees in the positive direction (arrow X direction in FIG. 10) until the claw 27 comes into contact with the contact surface 71A of the first positioning part 71 of the flange main body 53. When only the eccentric shaft 17 rotates 180 degrees, the eccentric shaft portion 17B of the eccentric shaft 17 moves toward the maintenance port 62 (radially outward) by the distance equal to twice its eccentricity amount (corresponding to the diameter dimension of the eccentric shaft portion 17B). Consequently, the valve element unit 52 is seated on the maintenance port 62 to close the maintenance port 62. At this time, in the state where the valve element unit 52 is seated on the maintenance port 62, the maintenance sealing part 60 is elastically deformed due to the pressing force of the valve element unit 52, so that the maintenance port 62 is airtightly sealed (maintenance state). In order to open the maintenance port 62, the motor rotating shaft 66A of the driving motor 66 is rotated in the reverse direction (arrow Y direction in FIG. 10) as described above. At this time, the rotation of the support 13 is in a stopped state since the support 13 is fixed by the maintenance handle 77.

As described above, according to the gate valve device of the second embodiment, providing the rotation stopper 75 makes it possible to accurately set the rotation stop position of the support 13. Consequently, it is possible to accurately position the valve element unit 52 at the position facing the first opening 46 or the maintenance port 62. Further, since the valve element unit 52 moves radially outward while sealing surfaces of the valve element unit 52 are set parallel to a seating surface of the sidewall of the casing 44, it is possible to improve sealing performance of the valve element sealing part 58 and the maintenance sealing part 60. Further, since the valve element unit 52 moves radially outward while the sealing surfaces 56, 57 of the valve element unit 52 are set parallel to the seating surface of the sidewall of the casing 44 and the seating surface of the casing 44 comes into contact with the valve element sealing part 58 and the maintenance sealing part 60, it is possible to prevent the valve element sealing part 58 and the maintenance sealing part 60 from rolling and coming off respective sealing grooves. As a result, it is possible to maintain high sealing performance over a long period.

Further, providing only the single rotation stopper 75 makes it possible to reduce the number of components provided in the casing 44, resulting in a reduction in manufacturing cost. Further, the reduction in the number of the components provided in the casing 44 contributes to the prevention of an increase in the size of the gate valve device.

Further, since the cylindrical flange 51 and the rotation stopper 75 come into contact with each other in an environment outside the vacuum atmosphere, it is possible to prevent particles generated due to the contact therebetween from entering the inside of the vacuum atmosphere. As a result, it is possible to prevent the particles from adhering to an object to be processed in the vacuum atmosphere.

## Claims

1. A valve device comprising:
a valve element unit closing or opening an opening formed in a casing;
a valve element driving unit rotating said valve element unit around an axis to enable said valve element unit to move to a position facing the opening, and moving said valve element unit in a radial direction to enable said valve element unit to close or open the opening;
a sealing member provided on the valve element unit to airtightly seal the opening when the valve element unit closes the opening; and
a stopper restricting the rotation of the valve element unit,
wherein said valve element driving unit comprises: a support rotatably supporting said valve element unit; an eccentric shaft part which has an eccentric shaft portion connected to said valve element unit and having a center located at a position a predetermined distance apart from a center of the rotation, and which rotates to move said valve element unit in the radial direction; and a driving source rotating the support or the eccentric shaft part, and
wherein the stopper hinders the rotation of the support in one direction when said valve element unit is at the position facing the opening.

2. A valve device comprising:
a valve element unit closing or opening a first opening or a second opening of a casing, the first opening and the second opening being formed in one sidewall and another sidewall of the casing respectively;
a valve element driving unit rotating said valve element unit around an axis to enable said valve element unit to move to a position facing the first opening or the second opening, and moving said valve element unit in a radial direction to enable said valve element unit to close or open the first opening or the second opening;
a first sealing member and a second sealing member which are provided on said valve element unit, the first sealing member airtightly sealing the first opening when said valve element unit closes the first opening, and said second sealing member airtightly sealing the second opening when said valve element unit closes the second opening; and
a stopper restricting the rotation of said valve element unit,
wherein said valve element driving unit includes: a support rotatably supporting said valve element unit; an eccentric shaft part which has an eccentric shaft portion connected to said valve element unit and having a center located at a position a predetermined distance apart from a center of the rotation, and which rotates to move said valve element unit in the radial direction; and a driving source rotating the support or the eccentric shaft part, and
wherein the stopper hinders the rotation of the support in one direction when said valve element unit is at the position facing the first opening, and hinders the rotation of the support in another direction when said valve element unit is at the position facing the second opening.

3. The valve device according to claim 1 or 2, further comprising a rotational force applier applying, to the support, a rotational force rotating the support in the one direction,
wherein the rotation of the support is controlled by a magnitude relation between the rotational force applied to the support from said rotational force applier and a driving force from said driving source.

4. The valve device according to claim 3, wherein said rotational force applier is a spiral spring.
